(19) Europäisches Patentamt
European Patent Office
Office européen des brevets

(11) Publication number: **0 372 756 B1**

(12) **EUROPEAN PATENT SPECIFICATION**

(45) Date of publication of patent specification: **29.12.93**

(51) Int. Cl.⁵: **C09J 7/02**

(21) Application number: **89312167.3**

(22) Date of filing: **23.11.89**

# (54) Pressure-sensitive article with priming layer.

(30) Priority: **05.12.88 US 279974**

(43) Date of publication of application:
**13.06.90 Bulletin 90/24**

(45) Publication of the grant of the patent:
**29.12.93 Bulletin 93/52**

(84) Designated Contracting States:
**DE ES FR GB IT**

(56) References cited:
**EP-A- 0 301 827**
**US-A- 4 196 254**

(73) Proprietor: **MINNESOTA MINING AND MANUFACTURING COMPANY**
**3M Center,**
**P.O. Box 33427**
**St. Paul, Minnesota 55133-3427(US)**

(72) Inventor: **Strobel, Mark A. Minnesota Mining and Manufacturing Co**
**2501 Hudson Rd**
**P.O. Box 33427**
**St. Paul Minnesota 55133-3427(US)**
Inventor: **Corn, Stewart H. Minnesota Mining and Manufacturing**
**2501 Hudson Rd**
**P.O. Box 33427**
**St. Paul Minnesota 55133-3427(US)**
Inventor: **Boston, David D. Minnesota Mining and Manufacturing**
**2501 Hudson Rd**
**P.O. Box 33427**
**St. Paul Minnesota 55133-3427(US)**
Inventor: **Woo, Edward J. Minnesota Mining and Manufacturing**
**2501 Hudson Rd**
**P.O. Box 33427**
**St. Paul Minnesota 55133-3427(US)**

(74) Representative: **Baillie, Iain Cameron et al**
**c/o Ladas & Parry**
**Altheimer Eck 2**
**D-80331 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 372 756 B1

## Description

### BACKGROUND OF THE INVENTION

#### 1. Field of the Invention

The present invention relates to a novel type of priming layer for pressure-sensitive adhesive articles. The invention particularly relates to film or sheet materials having a cold-seal or pressure-sensitive adhesive layer and the primer layer of the present invention.

#### 2. Background of the Art

Priming layers are often used when bonding or coating two different materials together. The objective of the priming layer (or prime) is to control the level of adherence of one material to another. Ordinarily the priming layer is used to increase the bond strength between two layers.

Where a coating is applied to a substrate and the composition of the coating does not have a natural affinity for the substrate, a primer layer is often used. Materials such as polyethylene terephthalate or polyolefins have well known problems in having coatings adhered thereto. In the photographic art, it's almost essential that priming layers be used, such as described in U.S. Patent Nos. 3,343,840; 3,495,984; and 3,788,856. European Patent Publication No. 0,301,827 published after the priority date of the subject patent and accordingly only available as a piece of relevant prior art for the purposes of Articles 54(3) and 54(4) EPC in respect of some only of the designated states of the subject patent discloses the use of a continuous gelled or hydrolyzed coating of particular inorganic oxides to form a subbing layer for photographic elements. These primer layers were found to provide good bonding strength for photosensitive silver halide layers, particularly those with gelatin binders, and were also found to provide good antistatic properties. The reference describes the use of ambifunctional silane coupling agents in the continuous network of particles to improve the wet development strength of the primer layer.

United States Patent No. 4,196,254 (Puskadi) discloses a pressure-sensitive adhesive tape having a polyolefin, polyester or metal foil backing and an acrylate pressure-sensitive adhesive layer firmly adhered to the backing through a primer layer comprising a primer composition consisting essentially of an intimate mixture of a primary amino-functional trialkoxy silane and a particular carboxylated polymer component having an affinity for the acrylate adhesive.

Many other combinations of coatings and substrates require the use of primer layers which are particularly suitable for the exact combination of materials to be adhered. Pressure-sensitive adhesives are known to need primers for certain surfaces (e.g., U.S. Patent No. 3,991,002) and many other polymer coatings also need unique priming systems (e.g., U.S. Patent No. 4,181,766).

### SUMMARY OF THE INVENTION

The present invention relates to pressure-sensitive or cold-seal adhesive elements having a substrate, a primer layer on said substrate, and a pressure-sensitive or cold-seal adhesive layer on said primer layer, each primer layer having a specified thickness and comprising a continuous gelled or hydrolyzed network of inorganic particles, preferably inorganic oxide particles. The network contains a specified amount of a particular ambifunctional silane.

### DETAILED DESCRIPTION OF THE INVENTION

The present invention relates to pressure-sensitive or cold-seal adhesive elements. These elements comprise a substrate having a primer layer on at least one surface of the substrate and a pressure-sensitive or cold-seal adhesive layer on at least one primer layer. The primer layer comprises a continuous gelled network of inorganic particles, preferably inorganic oxide particles, containing an ambifunctional silane.

Pressure-sensitive adhesives are art recognized as a standard class of materials. These are adhesives which in dry (substantially solvent free except for residual solvent) form are aggressively and permanently tacky at room temperature (e.g., 15 to 25 °C) and firmly adhere to a variety of dissimilar surfaces upon mere contact without the need for more than manual pressure. They require no activation by water, solvent or heat in order to exert a strong adhesive holding force towards such materials as paper, cellophane, glass, wood and metals. They have a sufficiently cohesive holding and elastic nature so that, despite their aggressive tackiness, they can be handled with the fingers and removed from smooth surfaces without

leaving a substantial residue (cf. Test Methods for Pressure-Sensitive Tapes, 6th Ed., Pressure Sensitive Tape Council, 1953). Pressure-sensitive adhesives and tapes are well known, and the wide range and balance of properties desired in such adhesives has been well analyzed (cf. U.S. Patent 4,374,883; and "Pressure-Sensitive Adhesives" in Treatise on Adhesion and Adhesives Vol. 2, "Materials", R.I. Patrick, Ed., Marcel Dekker, Inc., N.Y., 1969). The various materials and compositions useful as pressure-sensitive adhesives are available commercially and are thoroughly discussed in the literature (e.g., Houwink and Salomon, Adhesion and Adhesives, Elsevier Publ. Co., Amsterdam, Netherlands, 1967; Handbook of Pressure-Sensitive Adhesive Technology, Donates Satas, Ed., VanNostrand Reinhold Co., N.Y., 1982).

Pressure-sensitive adhesives are generally chemically composed of rubber-resin materials, acrylic resins, polyurethane resins, silicone resins, and the like. Among the various patent literature describing compositions and improvements in pressure-sensitive adhesive formulations are U.S. Reissue Patent No. 24,906; U.S. 2,652,351; U.S. 3,740,366; U.S. 3,299,010; U.S. 3,770,708; U.S. 3,701,758; U.S. 3,922,464; U.S. 3,931,087; U.S. 4,012,560; U.S. 4,077,926; U.S. 4,387,172; U.S. 4,418,120; U.S. 4,629,663; and the like. These classes of rubber resin, acrylic, silicone, and polyurethane pressure-sensitive adhesives as well as any other pressure-sensitive adhesives are generally useful in the present invention.

A cold seal adhesive is a material that under pressure alone will form a strong bond and for example, may comprise an uncrosslinked copolymer of (a) 10 to 50 weight percent of acrylonitrile and (b) 50 to 90 weight percent of at least one of butadiene and isoprene, said copolymer having a Mooney viscosity of from 30 to 95, and said adhesive copolymer layer having a water contact angle of at least 20°. A cold-seal adhesive is pressure-sensitive in a sense (it bonds under pressure), but differs from the conventional pressure-sensitive adhesive in that cold-seal adhesives are not tacky at room temperature.

The substrate of the invention bears a coating comprising a continous gelled network of inorganic metal oxide particles. The network must contain specified ambifunctional silane. The particles preferably have an average primary particle size of less than 50 or 20 nm. As used herein, the term "continuous" refers to covering the surface of the substrate with virtually no straight-line penetrable discontinuities or gaps in the areas where the gelled network is applied. However, the layer may be and usually is porous, without significant straight-line pores or gaps in the layer. The term "gelled network" refers to an aggregation of colloidal particles linked together to form a porous three-dimensional network. Generally all of or the majority of linkages are from the material of the particles to each other or to the silane additive, but some binder such as up to 5% by weight (to the metal oxide) of polymer may also be present. The term "porous" refers to the presence of voids between the inorganic metal oxide particles created by the packing of the metal oxide particles. The term "primary particle size" refers to the average size of unagglomerated single particles of inorganic metal oxide. The term "particle" includes spherical, non-spherical, and fibrillar particulate arrangements. If the ambifunctional silane is added to an aqueous metal oxide sol before coating, then the silane will be hydrolyzed at the positions described as (OR') wherein $R^1$ is a hydrocarbyl group such as alkyl, aryl, acalkyl, and alkaryl, substituting hydroxy groups for the (OR') groups. For example, a triethoxysilane will become a trihydroxysilane. In solution with the metal oxide particles, the hydrolyzed silane molecules may associate with the metal oxide particles by "oxane" bonding in a reversible fashion (SiOH + HOM(particle)←→Si-O-M(particle)). As the solution is dried into a coated layer, it is expected that most of the hydrolyzed silane molecules will become associated with metal oxide particles through "oxane" bonding such that they cannot be washed out of the coating by a simple water wash.

The presence of the silane molecules does not prevent the gelled particle network from gaining cohesive strength, although the time required to gain cohesive strength may be increased.

The coating is of specified thickness and should be thicker than a monolayer of particles. Preferably the coating comprises a thickness equal to or greater than three average particle diameters and more preferably equal to or greater than five particle diameters.

The articles of the invention comprise a substrate which may be transparent, translucent, or opaque to visible light having at least one polymeric or metallic surface, and have formed thereon a coating in the form of a continuous gelled network of inorganic oxide particles. A specified adhesion promoting effective amount of an ambifunctional silane must be present in or on the gelled network. When the coating is applied to transparent substrates to achieve increased light transmissivity, the coated article preferably exhibits a total average increase in transmissivity of normal incident light of at least two percent and up to as much as ten percent or more, when compared to an uncoated substrate, depending on the substrate coated, over a range of wavelengths extending at least between 400 to 900 nm. An increase in light transmission of two percent or more is generally visually apparent and is sufficient to produce a measurable increase in energy transmissivity when the coated substrate is used. An increase in transmissivity is also present at wavelengths into the infrared portion of the spectrum.

The gelled network is a porous coating having voids between the inorganic oxide particles. If the porosity is too small, the antireflectance may be reduced. If the porosity is too large, the coating is weakened and may have reduced adhesion to the substrate. Generally, the colloidal solution from which the gelled network is obtained is capable of providing porosity of 25 to 70 volume percent, preferably 30 to 60 volume percent when dried. The porosity can be determined by drying a sufficient amount of the colloidal solution to provide a dried product sample of 50 to 100 mg and analyzing the sample using a "Quantasorb" surface area analyzer available from Quantachrome Corp., Syosett, NY.

The voids of the porous coating provide a multiplicity of subwavelength interstices between the inorganic particles where the index of refraction abruptly changes from that of air to that of the coating material. These subwavelength interstices, which are present throughout the coating layer, provide a coating which may have a calculated index of refraction (RI) of from 1.15 to 1.40, preferably 1.20 to 1.30 depending on the porosity of the coating. When the porosity of the coating is high, e.g., 70 volume percent or more, lower values for the RI are obtained. When the porosity of the coating is low, e.g., 25 volume percent or less, higher values for the RI are obtained.

The average primary particle size of the colloidal inorganic metal oxide particles is preferably less than about 20 nm. The average primary particle size of the colloidal inorganic metal oxide particles is more preferably less than about 7 nm. When the average particle size becomes too large, the resulting dried coating surface is less efficient as an antireflection coating.

The average thickness of the dried coating is from 30 to 1,000 nm, more preferably 80 to 500 nm and most preferably between 90 and 200 nm. Such coatings provide good antistatic properties. When the coating thickness is too great, the coating has reduced adhesion and flexibility and may readily flake off or form powder under mechanical stress.

Articles such as transparent sheet or film materials may be coated on a single side or on both sides to increase light transmissivity, the greatest increase being achieved by coating both sides.

The process of coating the layer of the present invention comprises coating a substrate with a solution of colloidal inorganic metal oxide particles (and preferably the silane at this point), the solution preferably containing at least 0.2 or 0.5 to 15 weight percent of the particles, the particles preferably having an average primary particle size less than 50 or 20 nm, more preferably less than 7 nm, and drying the coating at a temperature less than that which degrades the substrate, preferably less than 200 °C, more preferably in the range of 80 to 120 °C. The coating provides the substrate with an average reduction in specular reflectance of at least two percent over wavelengths of 400 to 900 nm.

Coating may be carried out by standard coating techniques such as bar coating, roll coating, knife coating curtain coating, rotogravure coating, spraying and dipping. The substrate may be treated prior to coating to obtain a uniform coating or to promote adhesion using techniques such as corona discharge, plasma, flame treatment, or other oxidizing processes. With some substrates, treatment is particularly desirable for good adhesion. The specified ambifunctional silane may be added before, during or after coating. It is preferred to add the silane to the coating mixture before coating. If the silane is added after the "gelled network" has been coated and dried, it should be added from a water-containing solution, so that the silane will be in its hydrolyzed form.

The colloidal inorganic oxide solution, e.g., a hydrosol or organosol, is applied to the substrate of the article to be coated and dried at a moderately low temperature, generally less than 200 °C, preferably 80-120 °C, to remove the water or organic liquid medium. The coating may also be dried at room temperature, provided the drying time is sufficient to permit the coating to dry completely. The drying temperature should be less than at which the substrate degrades. The resulting coating is hygroscopic in that it is capable of absorbing and/or rehydrating water, for example, in an amount of up to 15 to 20 weight percent, depending on ambient temperature and humidity conditions.

The colloidal inorganic oxide solution utilized in the present invention comprises finely divided solid inorganic metal oxide particles in a liquid. The term "solution" as used herein includes dispersions or suspensions of finely divided particles of ultramicroscopic size in a liquid medium. The solutions used in the practice of this invention are clear to milky in appearance. Inorganic metal oxides particularly suitable for use in the present invention are those in which the metal oxide particles are negatively charged, which includes tin oxide ($SnO_2$), titania, antimony oxide ($Sb_2O_5$), silica, and alumina-coated silica as well as other inorganic metal oxides of Groups III and IV of the Periodic Table and mixtures thereof. The selection of the inorganic metal oxide is dependent upon the ultimate balance of properties desired. Inorganics such as silicon nitride, silicon carbide, and magnesium fluoride when provided in sol form are also useful.

The colloidal coating solution preferably contains 0.2 to 15 weight percent, more preferably 0.5 to 8 weight percent, colloidal inorganic metal oxide particles. At particle concentrations of about 15 weight percent, the resulting coating may have reduced uniformity in thickness and exhibit reduced adhesion to the

substrate surface. Difficulties in obtaining a sufficiently thin coating to achieve increased light transmissivity and reduced reflection may also be encountered at concentrations above about 15 weight percent. At concentrations below 0.2 weight percent, process inefficiencies result due to the large amount of liquid which must be removed and antireflection properties may be reduced.

The thickness of the applied wet coating solution is dependent on the concentration of inorganic metal oxide particles in the coating solution and the desired thickness of the dried coating. The thickness of the wet coating solution is such that the resulting dried coating thickness is from 30 to 1,000 nm, preferably from 80 to 500 nm thick, most preferably 90 to 200 nm thick.

The coating solution may also optionally contain a surfactant to improve wettability of the solution on the substrate, but inclusion of an excessive amount of surfactant may reduce the adhesion of the coating to the substrate. Examples of suitable surfactants include "Tergitol" TMN-6 (Union Carbide Corp.) and "Triton" X-100 (Rohm and Haas Co.). Generally the surfactant can be used in amounts of up to 0.5 weight percent of the solution.

The coating solution may optionally contain a very small amount of polymeric binder, particularly a hydrophilic polymer binder, to improve scratch resistance, or to reduce formation of particulate dust during subsequent use of the coated substrate. Useful polymeric binders include polyvinyl alcohol, polyvinyl acetate, gelatin, polyesters, polyamides, polyvinyl pyrrolidone, copolyesters, copolymers of acrylic acid and/or methacrylic acid, and copolymers of styrene. The coating solution can contain up to 5 weight percent of the polymeric binder based on the weight of the inorganic metal oxide particles. Useful amounts of polymeric binder are generally in the range of 0.1 to 5 weight percent to reduce particulate dust. These binders can reduce some of the beneficial properties (e.g., antistatic properties) of the coatings if used, so that they are not most preferred.

The ambifunctional silane is present as from 0.1% to 20% by weight of the solids content of the gelled particulate layer. Preferably the ambifunctional silane is present as from at least 1.0 by weight of the solids content of the particulate layer. More preferably the silane is present as 2.0 to 15% by weight of the solids content of the particulate layer, and most preferably as 3 to 10% by weight.

The term ambifunctional silane means that the compound has reactive silanes on one end of the molecule and a different reactive species capable of reacting with a photographic hardener for gelatin or with oxidized functional groups (e.g., hydroxyl or preferably carboxylic acid) on the polymeric surfaces which are in contact with the inorganic oxide layer. This second functionality enables the compound to react with the inorganic particle (through the silane group) and also react with the oxidized functional group (or reacting with an additive which also reacts with the main polymer) and/or with oxidized or oxygen containing groups on the substrate. Amongst the preferred second functional groups on the compound are amino groups and epoxy (e.g., glycidyl) groups. The second functionality may be present as a single functional moiety or may be present as a multiple number of such groups.

A formula that is used to represent the ambifunctional silanes of the present invention is

$(Q)_n\text{-}R\text{-}Si(OR^1)_3$

wherein

$R^1$ is alkyl or aryl,

R is an organic group with (n + 1) external bonds or valences,

n is 0, 1 or 2, and

Q is a moiety reactive with photographic hardeners, oxidized functionalities or directly with gelatin (e.g., alpha-amino acids).

Preferably $R^1$ is alkyl of 1 to 10 carbon atoms and most preferably 1 to 4 carbon atoms. R is preferably an aliphatic or aromatic bridging group such as alkylene, arylene, alkarylene, or aralkylene which may be interrupted with ether linkages (oxygen or thioethers), nitrogen linkages, or other relatively inert moieties. More preferably R is alkylene of 1 to 12 carbon atoms, preferably 2 to 8 carbon atoms, with n equal to 1. Q is preferably epoxy, or amino, primary or secondary, more preferably primary amino.

Where previously indicated that the second functional group may be present as a multiple number of such groups it is meant that the moiety $(Q)_n$-R- may include moieties such as

$NH_2\text{-}(CH_2)_2\text{-}NH\text{-}(CH_2)_2\text{-}NH\text{-}(CH_2)_3\text{-}$

$NH_2\text{-}(CH_2)\text{-}_3$

$(NH_2)_2\text{-}CH\text{-}CH_2\text{-}$ and

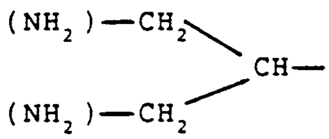

The substrates of the invention may comprise any material having at least one polymeric surface which is to be used as the major surface of the substrate. The substrates preferably have an oxygen containing functional moiety on its surface. This moiety may be present as a result of the chemical nature of the surface or as a result of oxygenating treatment of the surface as by corona, plasma, flame treatment, etc. The preferred oxygen containing moieties are hydroxyl and carboxyl, particularly carboxylic acid. Ester groups, aldehyde groups and silanols are also useful moieties. The groups may be part of the substantive base or a coating thereon (as on coated paper). Some polymeric film surfaces contain small amounts of active functional groups (including oxygen containing groups) due to the presence of particular end groups on the polymers (e.g., polythyleneterephthalate has -COOH end groups) or as a result of incomplete reaction of the monomers (e.g., incomplete esterification of cellulose triacetate, CTA). In these cases the density of surface functional groups tends to be insufficient by itself to gain good adhesion to the sol-gel coatings of this invention. Thus, polyethyleneterephthalate and cellulose triacetate should be corona treated prior to application of the sol-gel coating compositon for attaining the best results. Many other film surfaces normally contain sufficient oxygen functional groups to enable good adhesion to the primer of the invention without any corona treatment. Films such as polycarbonates are noteworthy in this regard. Esters may be subjected to hydrolysis or energy treatment to produce -COOH or -OH groups on the surface.

Supports which can be used include films of metal, or metal coated polymers, or synthetic polymers such a polyalkyl acrylate or methacrylate, polystyrene, polyvinyl chloride, partial formulation polyvinyl alcohol, polycarbonate, polyalkylenes, polyolefins, polyesters such as polyethylene terephthalate, and polyamides, films of cellulose derivatives such as cellulose nitrate, cellulose acetate, cellulose triacetate, and cellulose acetate butyrate, paper covered with $\alpha$-olefin polymers or gelatin (a natural polymer), for example, and synthetic papers made of polystyrene; that is, any transparent or opaque support. Primed polymeric substrates are also useful but less preferred since the sol-gel coating is a primer, including, but not limited to, gelatin-primed polymers (e.g., gelatin on poly(ethylene terephthalate)), and poly(vinylidene chloride) copolymers on polyester. Other primers such as aziridines, acrylates, and melamine-formaldehyde are also useful. This includes polymeric materials loaded with pigments and particulates such as titania to improve the white background appearance of the element.

EXAMPLES 1 & 2

Samples of sol-gel coated cellulose acetate (CA) and biaxially oriented polypropylene (BOPP) were prepared as follows: Thermally extruded, biaxially oriented 50-micrometer thick, 15-cm wide polypropylene film (Example 1) and the glossy side of extruded 40-micrometer thick, 15-cm wide cellulose acetate (Example 2) were corona treated at 25° C in ambient air at an energy level of 0.7 J/cm$^2$ (23 m/min film velocity at a corona power of 2250 W). The treated films were then overcoated with the sol-gel composition using an air-knife coater and dried for about 1 minute at 65°C to achieve a dry coating thickness of about 260 nm. The sol-gel composition consisted of 4% Nalco 2326 collodial silica, 0.36% aminopropyltriethoxysilane coupling agent, and 0.03% Triton-X-100 surfactant, in water. Also, non-corona treated samples of the same substates were coated with the sol-gel composition.

Acrylate Adhesive Coating & Testing

The sol-gel primed substrates and unprimed control films were coated with a latex acrylate adhesive consisting of neutralized 95:5 isooctylacrylate: acrylic acid copolymer emulsion dispersed in water. After evaporation of the water to leave an adhesive layer about 20 micrometers thick, the coated products were converted to roll form, that is, to rolls of PSA tape. The adhesive-coated, sol-gel-coated substrates were then conditioned at ca. 20° C and 50% r. h. for 24 hours prior to adhesion testing.

The adhesive surface of each sample was then placed in contact with an anodized aluminum plate and the film rolled down with a 1-kg roller to insure intimate contact. When the film is stripped off at 90° to the aluminum plate at a rate of about 230 cm/min, the removal force should be greater than for an untreated, uncoated control film. It is necessary that the predominant mode of adhesive failure be cohesive in the

acrylate adhesive ("split") at peel forces greater than ca. 1.1 kg/cm rather than separated from the film and adhering to the aluminum plate ("adhesive transfer" or "sol-gel transfer").

Those samples showing acceptable performance ("split") after initial testing were then subjected to heat aging for 11 days at 50° C prior to retesting by the method described above. The results of adhesion testing are given in two parts: the bond strength in kg/cm and the mode of adhesion failure. In addition to the two corona treated, sol-gel primed examples, also listed are six comparative controls consisting of the two untreated base films, the two films coated with sol-gel without a prior air-corona treatment, and the two films treated with an air corona but without an sol-gel overcoating.

| | initial (Kg/cm) | after heat aging* |
|---|---|---|
| Example 1<br>Sol-gel-on-BOPP | 1.4-1.5, split | 1.25-1.5, split |
| Example 2<br>Sol-gel-on-CA | 1.4-1.5, split | 1.15-1.4, split |
| Controls<br>Untreated BOPP | 0.3-0.5, adhesive transfer | |
| Untreated CA | 0.5-0.7, adhesive transfer | |
| Sol-gel-on-untreated-BOPP | 0, sol-gel transfer | |
| Sol-gel-on-untreated-CA | 0.35-1.55, sol-gel transfer | |
| air-corona-treated BOPP (no sol-gel) | 0.35-0.6, adhesive transfer | |
| air-corona-treated CA | 0.6-1.1, adhesive transfer | |

* - 11 days at 50° C

EXAMPLES 3 & 4

Preparation of Primed Substrates: The substrates listed below were corona treated at 25°C in air at a power level of 0.7/J/cm$^2$ (600W, at 15m/min). The treated film was then overcoated with an sol-gel coating mixture, using a draw-down technique with a #4 wirewound rod. The sol-gel coating mixture consisted of: 4% Nalco 2326 colloidal silica, 0.36% aminopropyltriethoxysilane, and 0.03% Triton X-100 in water. The silica coating was then cured in a counterflow oven for 2 min. at 100°C.

Example 3

Natural Rubber (isoprene/polyterpene) adhesive (3M #610) tape-pull adhesion test: Half of a 2.5cm X 10cm piece of adhesive tape consisting of a natural rubber (isoprene/polyterpene) adhesive coated onto a cellophane backing was affixed to the primed film surface using a plastic card. Then, while holding the film on a flat surface, the tape was pulled at about 120° with sufficient force to cause adhesive failure. Adhesion of primer to both substrate and adhesive was considered excellent if the natural rubber adhesive was stripped from its cellophane backing and onto the primer sol-gel.

The tape-pull test described above was applied to the various sol-gell/corona primed films listed below. In all cases, the natural rubber adhesive stripped to the sol-gel coating.

Film Type

| | |
|---|---|
| PE | polyethylene |
| cast PP | polypropylene |
| BOPP | biaxially-oriented polypropylene |
| PET | polyethyleneterephthalate |
| PMMA | polymethylmethacrylate |
| Polycarbonate | |
| Cellulose acetate | |
| Nylon-6 | |
| Silicone release film | |
| PVC | polyvinylchloride |
| $PVF_2$ | polyvinylidenedifluoride $(-CH_2CF_2-)_n$ |

Example 4.

Cold Seal (acrylonitrile/butadiene) adhesive: Adhesion was tested according to the following method: The primed film surface was placed in contact with an anodized aluminum plate bearing a butadiene/acrylonitrile cold seal adhesive, rolled six times with a 2 kg roller, and allowed to remain at room temperature conditions for 24 hours. A free end of the film was then doubled back on itself at 180° and stripped away at about 230 cm/min. The force to cause adhesive failure is measured in kg/cm.

The test method for cold seal adhesive was applied as above. Sol-gel/corona was compared to untreated film, corona only, and sol-gel only. Breaking forces are in kg/cm.

| Film Type | Sol-Gel/corona | Untreated | Sol-Gel only | corona only |
|---|---|---|---|---|
| PE | >0.8 | .02 | 0 | 0.2 |
| $PVF_2$ | >0.8 | .02 | 0 | 0.25 |

The above results show that Sol-gel/corona constitutes a functional primer for adhesives over a range of film substrate types and adhesive types. It differs from traditional primers in that its usefulness derives from its high surface area and microporosity. It also differs from traditional priming methods because it is applied from aqueous medium. Furthermore, it is especially amenable to the use of waterborne adhesive latexes, promoting both adhesion and coatability of the latex.

**Claims**

**1.** A pressure-sensitive or cold-seal adhesive element comprising a substrate having on at least one surface thereof a primer layer said primer layer having an average thickness of between 30 and 1000 nm, and adhered to said primer layer a pressure-sensitive or cold-seal layer, said primer layer comprising a continuous gelled network of inorganic particles containing an ambifunctional silane in an adhesion promoting effective amount of from 0.1% to 20% by weight of the solids content of said gelled particulate primer layer, said ambifunctional silane being represented by the formula:

$(Q)_n\text{-}R\text{-}Si(OR^1)_3$

wherein

$R^1$ is alkyl or aryl,

R is an organic group having n + 1 external valences,

n is 1, or 2, and

Q is a moiety reactive with gelatin hardeners, gelatin, carboxyl groups, or hydroxyl groups on organic polymers.

**2.** The element of claim 1 wherein said substrate comprises an organic polymeric film or sheet.

**3.** The element of any preceding claim wherein said inorganic particles comprise inorganic oxide particles.

4. The element of any preceding claim wherein said inorganic oxide particles are selected from silica, titania, tin oxide and mixtures thereof.

5. The element of any preceding claim where $R^1$ is alkyl of 1 to 4 carbon atoms, R is a bridging moiety selected from alkylene, arylene, alkarylene, and aralkylene of up to 10 carbon atoms,
n is 1, and
Q is amino or epoxy.

6. The element of any preceding claim wherein said surface of said substrate has oxygen-containing moieties thereon.

**Patentansprüche**

1. Haftkleb- oder Kaltsiegelklebelement, umfassend ein Substrat mit mindestens der einen Oberfläche davon als eine Grundierschicht, wobei die Grundierschicht eine mittlere Dicke zwischen 30 und 1.000 nm aufweist, und mit der Grundierschicht verklebt eine Haftkleber- oder Kaltsiegelschicht, wobei die Grundierschicht ein zusammenhängendes geliertes Netzwerk von anorganischen Teilchen aufweist, die ein ambifunktionelles Silan in einer die Haftung fördernden wirksamen Menge von 0,1 % bis 20 Gew.% des Feststoffgehalts der Grundierschicht mit gelierten Feststoffteilchen enthalten, und das ambifunktionelle Silan dargestellt wird durch die Formel:

$(Q)_n\text{-R-Si}(OR^1)_3$

worin
$R^1$ Alkyl oder Aryl ist,
R eine organische Gruppe mit n + 1 externen Valenzen ist,
n 1 oder 2 ist und
Q eine Gruppe ist, die mit Gelatinehärtern reaktionsfähig ist, Gelatine, Carboxylgruppen oder Hydroxylgruppen an organischen Polymeren.

2. Element nach Anspruch 1, bei welchem das Substrat ein organischer polymerer Film oder Folie ist.

3. Element nach einem der vorstehenden Ansprüche, bei welchem die anorganischen Teilchen anorganische Oxidteilchen umfassen.

4. Element nach einem der vorstehenden Ansprüche, bei welchem die anorganischen Oxidteilchen ausgewählt werden aus Silica, Titandioxid, Zinnoxid und deren Mischungen.

5. Element nach einem der vorstehenden Ansprüche, bei welchem $R^1$ Alkyl mit 1 bis 4 Kohlenstoffatomen ist, R eine brückenbildende Gruppe ist, die ausgewählt wird aus Alkylen, Arylen, Alkarylen und Aralkylen mit bis zu 10 Kohlenstoffatomen,
n 1 ist und
Q Amino oder Epoxy ist.

6. Element nach einem der vorstehenden Ansprüche, bei welchem die Substratoberfläche Sauerstoff enthaltende Gruppen aufweist.

**Revendications**

1. Elément adhésif sensible à la pression ou pour soudage à froid, comprenant un substrat sur au moins l'une des surfaces duquel se trouve une couche promotrice d'adhérence, la couche promotrice d'adhérence ayant une épaisseur moyenne d'environ 30 à 1000 nm, une couche sensible à la pression, ou pour soudage à froid, adhérant à la couche promotrice d'adhérence, la couche promotrice d'adhérence comprenant un réseau gélifié continu de particules minérales contenant un silane bifonctionnel, en une quantité à effet promoteur d'adhérence de 0,1 à 20 % en poids par rapport à la teneur en extrait sec de la couche promotrice d'adhérence particulaire gélifiée, le silane bifonctionnel étant représenté par la formule :

$(Q)_n\text{-}R\text{-}Si(OR^1)_3$

dans laquelle $R^1$ est un radical alkyle ou aryle,
R est un groupe organique ayant n + 1 valences externes,
n vaut 1 ou 2, et
Q est un fragment pouvant réagir avec les durcisseurs à base de gélatine, la gélatine, les groupes carboxyle ou encore les groupes hydroxyle se trouvant sur des polymères organiques.

**2.** Elément selon la revendication 1, dans lequel le substrat comprend un film ou une feuille polymère organique.

**3.** Elément selon l'une quelconque des revendications précédentes, dans lequel les particules minérales comprennent des particules d'oxydes minéraux.

**4.** Elément selon l'une quelconque des revendications précédentes, dans lequel les particules d'oxyde minéral sont choisies parmi la silice, l'oxyde de titane, l'oxyde d'étain et leurs mélanges.

**5.** Elément selon l'une quelconque des revendications précédentes, dans lequel $R^1$ est un radical alkyle ayant de 1 à 4 atomes de carbone, R est un fragment pontant choisi parmi l'ensemble comprenant les radicaux alkylène, arylène, alcarylène et aralkylène ayant jusqu'à 10 atomes de carbone,
n vaut 1, et
Q est un radical amino ou époxy.

**6.** Elément selon l'une quelconque des revendications précédentes, dans lequel la surface du substrat porte des fragments oxygénés.